# EUROPÄISCHE PATENTANMELDUNG

(11) **EP 1 211 266 A1**
(43) Veröffentlichungstag der Anmeldung: **05.06.2002**
(21) Anmeldenummer: 01127301.8
(22) Anmeldetag: 19.11.2001
(51) Int. Cl.: C08F 8/12, A61L 15/60

(54) **Verfahren zur Herstellung von Superabsorbern aus Polyacrylnitril-Emulsionen unter adiabatischen Reaktionsbedingungen**

(30) Priorität: 30.11.2000 DE 10059593
(71) Anmelder: BAYER AG, 51368 Leverkusen (DE)
(72) Erfinder: Sackmann, Günter, Dr., 51379 Leverkusen (DE); Meyer, Rolf-Volker, Dr., 53804 Much (DE); Schapowalow, Sergej, Dr., 410010 Saratov (RU); Bayburdov, Telman, Dr., 410048 Saratov (RU); Stupen'kova, Lyudmila, Dr., 410048 Saratov (RU); Nakonetschny, Igor, 410065 Saratov (RU)

(57) **Zusammenfassung**

Die Erfindung betrifft ein Verfahren zur Herstellung von superabsorbierenden Polymerisaten auf Basis von feinteiligen unvernetzten und/oder vernetzten wässrigen Polyacrylnitril-Emulsionen.

## Beschreibung

Die Erfindung betrifft ein Verfahren zur Herstellung von superabsorbierenden Polymerisaten auf Basis von feinteiligen unvernetzten und vernetzten wässrigen Polyacrylnitril-Emulsionen .

Superabsorbierende Polymerisate sind bekannt und werden hauptsächlich bei der Herstellung von Windeln und Inkontinenzartikeln, aber auch als wasserspeichernde Materialien in der Landwirtschaft sowie zur Ummantelung von Elektrokabeln eingesetzt. In der Regel handelt es sich bei den kommerziell verfügbaren superabsorbierenden Polymerisaten um weitmaschig vernetzte, wasserunlösliche Polymerisate auf Basis von Alkalisalzen der Polyacrylsäure oder von Copolymerisaten aus Acrylsäure und Acrylamid, die durch radikalisch initiierte Copolymerisation von Acrylsäure und polyfunktionellen Monomeren, wie z.B. Divinylbenzol, Ethylenglykoldimethacrylat, Ethylenglykoldiallylether, Butandiolacrylat, Hexandiolmethacrylat, Polyglykoldiacrylat, Trimethylolpropandiacrylat, Allylacrylat, Diallylacrylamid, Triallylamin, Diallylether, Methylenbisacrylamid und N-Methylolacrylamid, erhalten werden. Aufgrund ihrer molekularen Struktur sind solche Polymerisate in der Lage, unter Quellung und Ausbildung von Hydrogelen grosse Mengen an Flüssigkeiten aufzunehmen und diese auch unter Druck festzuhalten.

In den Patentanmeldungen EP-A-670 335 und EP-A-697 416 werden superabsorbierende Polymerisate mit extrem hohem Quellvermoegen und hohen Gelfestigkeiten beschrieben. Diese Produkte erhält man durch alkalische Hydrolyse von Polyacrylnitril (PAN)-Emulsionen bei Temperaturen zwischen 50-100°C und Reaktionszeiten von 1 bis 2 Stunden. Bei diesem Verfahren werden nach der Hydrolyse Produkte mit superabsorbierenden Eigenschaften durch Ausfällen mit Lösungsmitteln, wie z.B. aliphatischen Monoalkoholen, als feinteilige Pulver isoliert. Nach dem Filtrieren und Trocknen werden die superabsorbierenden Polymerisate auf das gewünschte Komgrößenspektrum gemahlen.

Die zur Herstellung der superabsorbierenden Polymerisate benötigten feinteiligen, wässrigen, hochmolekularen, unvernetzten oder vernetzten Polyacrylnitril-Emulsionen werden durch die Homo- und/oder Copolymerisation von Acrylnitril in Gegenwart spezieller anionischer polymerer Emulgatoren erhalten ( EP-A-590 460). Die Molekulargewichte der nach diesem Verfahren dargestellten unvernetzten Polyacrylnitril-Emulsionen liegen im Bereich von 5·10⁵ bis 1·10⁷ g/Mol, bevorzugt von 2·10⁶ bis 5·10⁶ g/Mol. Die Teilchengrößen der unvernetzten oder vernetzten wässrigen PAN-Emulsionen liegen im Bereich zwischen 100 und 300 nm, bevorzugt zwischen 100 und 200 nm (bestimmt mittels Laser Korrelations-Spektroskopie).

Bei der Hydrolyse solcher PAN-Emulsionen mit wässrigen Lösungen von Alkalihydroxiden entstehen die teilhydrolysierten Homo- und/oder Copolymerisate von Acrylnitril, wobei 30 bis 80 Mol.-% der Nitrilgruppen in Carboxylatgruppen und 20 bis 70 Mol.-% Nitrilgruppen in Carbonamidgruppen umgewandelt sind und 0 bis 20 Mol.-% der Nitrilgruppen unverändert bleiben.

Aufgrund des bei beginnender Hydrolyse auftretenden Übergangs von der niedrigviskosen PAN-Emulsion in den hochviskosen, wassergequollenen Zustand stößt man bei der Durchführung der beschriebenen diskontinuierlichen Verfahren in konventionellen Rührapparaturen sehr schnell an eine Konzentrationsgrenze. Es können lediglich Reaktionsgemische mit Polyacrylnitril-Konzentrationen bis maximal 13-15 Gew.-% eingesetzt werden.

Zur diskontinuierlichen sowie zur kontinuierlichen Verarbeitung solcher gelartigen Reaktionsgemische wie sie beim Einsatz von PAN-Emulsionen mit Feststoffkonzentrationen größer als 15 Gew.-% auftreten, werden spezielle Apparaturen benötigt. In der Patentanmeldung EP-A-783 005 ist ein Verfahren zur kontinuierlichen Herstellung von superabsorbierenden Polymerisaten beschrieben, worin man wässrige Emulsionen von vernetzten oder unvernetzten Polyacrylnitril-Homo-und/oder Copolymerisaten in einem für die Durchführung von hochviskosen Reaktionen kontinuierlich arbeitenden, mischenden und knetenden Langzeitreaktor ("List-Reaktor") durch Reaktion mit wässrigen Alkalihydroxidloesungen bei 70 bis 100°C hydrolysiert.

Die Konstruktion des "List-Reaktors" erlaubt es, Hydrolysereaktionen an PAN-Emulsionen in hochkonzentrierten Reaktionsgemischen durchzuführen. Dabei können die Konzentrationen der vernetzten und unvernetzten Polyacrylnitril-Emulsionen im Reaktionsgemisch bei der Hydrolyse 10 bis 40 Gew.-% betragen, so dass als Folge der durch die Hydrolyse verursachten Gewichtszunahme des Polymeren von ca. 60%, bezogen auf das zu hydrolysierende Polyacrylnitril, die Endkonzentration im Reaktionsgemisch zwischen 16 und 60 Gew.-% beträgt.

Nachteil dieses Verfahrens ist der im Vergleich zu konventionellen Reaktoren deutlich höhere technische Aufwand aufgrund der deutlich aufwendigeren Konstruktion der Apparatur.

Es wurde nun ein Verfahren gefunden, das die Herstellung von superabsorbierenden Polymerisaten durch alkalische Hydrolyse von Polyacrylnitril-Emulsionen in hochkonzentrierten Reaktionsgemischen reproduzierbar in einer einfachen Apparatur erlaubt.

Gegenstand der Erfindung ist ein Verfahren zur Herstellung von superabsorbierenden Polymerisaten, bei dem unvernetzte oder vernetzte hochkonzentrierte wässrige Polyacrylnitril-Emulsionen durch Vermischung mit einer Alkalihydroxidlösung und ohne weitere Durchmischung unter adiabatischen Reaktionsbedingungen ("als Block") hydrolysiert werden. Die Ausgangstemperatur der Reaktionsmischung beträgt dabei im allgemeinen 10 bis 40°C, vorzugsweise 20 bis 30°C. Aufgrund der freigesetzten Reaktionswärme steigt die Temperatur des Reaktionsgemischs innerhalb von 1,5 bis 2,5 Stunden auf 70 bis 80°C. Die Geschwindigkeit dieses Temperaturanstiegs kann einerseits durch eine Änderung der Anfangstemperatur sowie durch die Schichtdicke des Reaktionsgemischs und andererseits durch eine Änderung der Konzentration sowie der stöchiometrischen Verhältnisse der Komponenten im Ausgangsreaktionsgemisch gesteuert werden.

Mit ansteigender Temperatur des Reaktionsgemischs ändert sich dessen Farbe von hellrot nach dunkelrot, und beim Erreichen der maximalen Temperatur (70-80°C) beginnt die sofortige Entfärbung des Reaktionsgemischs, und es bildet sich ein nicht mehr fließfähiges Produkt, das die Form eines hochviskosen elastischen Gels annimmt. Die Verweilzeit nach dem Erreichen der maximalen Temperatur liegt im Bereich von 0 bis 6 Stunden, bevorzugt 1 bis 5 Stunden. Die gesamte Dauer der Hydrolyse beträgt zwischen 2 und 8 Stunden, bevorzugt zwischen 3 und 6 Stunden. Dabei liegt das molare Verhältnis von Nitrilgruppen in den Ausgangspolymerisaten zu den Hydroxylgruppen der Alkalihydroxide im Bereich von 1:0,5 bis 1:1, bevorzugt von 1:0,6 bis 1:0,8.

Unter diesen adiabatischen Bedingungen kann sich das Endvolumen des Reaktionsgemischs (Gels) wegen des im Verlauf der Hydrolyse austretenden Ammoniaks um 10 bis 30 Vol.-% erhöhen.

Durch das erfindungsgemäße Verfahren ist es möglich, Reaktionsgemische mit einer Feststoffkonzentration von mehr als 35 Gew.-% herzustellen.

Zur Durchführung der wässrigen alkalischen Hydrolyse von hochmolekularen Polyacrylnitril-Emulsionen in hochkonzentrierten Reaktionsgemischen unter den geschilderten pseudoadiabatischen Bedingungen eignet sich beispielsweise eine Apparatur wie sie bereits bei der adiabatischen "Block"-Lösungspolymerisation von Acrylamid und/oder Acrylsäure eingesetzt wird (US-A 4 482 682, DE-A 1 218 167).

Die weitere Aufarbeitung des nach der alkalischen Hydrolyse entstandenen elastischen Gels zu dem gewünschten pulverförmigen Produkt mit superabsorbierenden Eigenschaften kann unter Anwendung von allgemein bekannten verfahrentechnischen Methoden (z.B. analog EP-A 783 005 und EP-A 670 335) insbesondere Zerkleinern des Gels, Neutralisation, Waschen Trocknen, Mahlen durchgeführt werden. Die Zerkleinerung des elastischen Gels zu Gel-Teilchen mit einer Teilchengröße von 1 bis 5 mm kann in einem Extruder mit einer Lochplatte vorgenommen werden. Die Neutralisation des Produktes kann entweder in einem Wasser-Alkohol-Gemisch oder durch Besprühen mit Säure auf die Oberfläche des Gel-Granulats erfolgen. Anschließend an diesen Sprühvorgang wird mit einem Wasser-Alkohol-Gemisch gewaschen und das Produkt durch Abfiltrieren isoliert. Nach dem Trocknen und Mahlen dieses Filterrückstandes auf den gewünschten Korngrößenbereich von 100 bis 850 um liegt dann der einsatzfähige Superabsorber vor.

Die auf die oben beschriebene Weise erhältlichen superabsorbierenden Polymerisate weisen ausgezeichnete anwendungstechnische Eigenschaften auf. So erreichen Produkte, die aus unvernetzten PAN-Emulsionen hergestellt wurden, Quellungsgrade zwischen 380 und 700 g/g in entionisiertem Wasser und zwischen 45 und 60 g/g in einer 0,9 %-iger NaCl-Lösung.

Unterwirft man die superabsorbierenden Polymerisate, die auf Basis von unvernetzten Polyacrylnitril-Emulsionen erhalten wurden, einer Hitzebehandlung mit Temperaturen zwischen 150 und 250°C, bevorzugt zwischen 170 und 200°C, dann werden deren jetzt schon ausgezeichnete anwendungstechnischen Eigenschaften nochmals deutlich verbessert. Dies trifft insbesondere auf die Absorptionsgeschwindigkeit der Superabsorber für Flüssigketen sowie die Gelfestigkeiten der gequollenen Polymeren zu. Außerdem wird durch diese Behandlung ihr Aufnahmevermögen für wässrige Flüssigkeiten unter Druck erhöht sowie der wasserlösliche Anteil in den Produkten verringert. Die Dauer der Behandlung der Produkte bei den genannten Temperaturen liegt in der Regel zwischen 2 und 30 Minuten, bevorzugt zwischen 5 und 20 Minuten.

Werden schwach mit Divinylbenzol vernetzte PAN-Emulsionen als Ausgangsprodukte für die alkalische Hydrolyse eingesetzt, dann liegen die Quellungsgrade der dabei erhaltenen Superabsorber in folgenden Bereichen: zwischen 300 und 450 g/g in entionisiertem Wasser und zwischen 30 und 47 g/g in 0,9 %-iger NaCl-Lösung.

Werden die auf die oben beschriebene Weise dargestellten Superabsorber noch zusätzlich einer nachträglichen Oberflächenmodifizierung unterworfen, dann zeigen die Produkte neben ihrem hohen Quellungsvermögen auch ausgezeichnete Anti-Gelblocking-Eigenschaften, was in ihren hohen Absorbency Under Load (AUL)-Werten bei 0,3 psi sowie bei 0,7 psi zum Ausdruck kommt. Eine solche Modifizierung (analog EP-A 936 223) erfolgt an der Oberfläche der gemahlenen und klassierten Teilchen in einem Wasser/Alkohol-Gemisch mit Formaldehyd oder anderen Aldehyden, wie z.B. Glutaraldehyd, als Vernetzungsmittel und in Gegenwart von kolloidaler Kieselsäure. Durch diese Behandlung findet eine gleichzeitige Oberflächenvernetzung und eine Immobilisierung der eingesetzten Kieselsäure statt, wodurch die erwähnte Verbesserung der anwendungstechnischen Eigenschaften eintritt.

Die erfindungsgemäßen superabsorbierenden Polymerisate werden beispielsweise in Hygieneprodukten, wie Babywindeln und Inkontinenzartikeln, als wasserspeichernde Materialien in der Landwirtschaft oder bei der Ummantelung von Elektrokabeln eingesetzt. Gegenstand der Anmeldung sind Hygieneartikel, wasserspeichernde Materialien in der Landwirtschaft und Ummantelungen von Elektrokabel, hergestellt aus den erfindungsgemäßen superabsorbierenden Polymerisaten.

### Beispiele

### Beispiel 1

Zur Hydrolyse wurde eine unvernetzte Polyacrylnitril-Emulsion mit einem Feststoffgehalt von 28,9 Gew.-%, einem [η]-Wert von 8,6 dl/g einer mittleren Teilchengröße von 120 nm eingesetzt.

Ein homogenisiertes Reaktionsgemisch aus 20,0 kg dieser PAN-Emulsion und 7,332 kg einer 47 Gew-%igen wässrigen NaOH-Lösung wird in einem rührerlosen 60 1-Reaktor, an dessen Boden sich eine Öffnung befindet, bei 25°C unter Stickstoff vorgelegt.

Die Schichtdicke des Reaktionsgemischs im Reaktor beträgt ca. 20 cm.

Zum Beginn der Hydrolyse weist das Ausgangsreaktionsgemisch demnach folgende Zusammensetzung auf:

| | |
|---|---|
| Konzentration an Polyacrylnitril ([PAN]) | 21,14 Gew.-% |
| Konzentration an Natronlauge ([NaOH]) | 12,61 Gew.-% |
| Molverhältnis von PAN zu NaOH | 1:0,79 |
| Gewichtsverhältnis von PAN zu Wasser | 1:3,13 |

Innerhalb von 2 Stunden erwärmt sich das Reaktionsgemisch adiabatisch aufgrund der freigesetzten Reaktionswärme auf eine Temperatur von 79°C. Danach wird das Reaktionsgemisch noch 4 Stunden bei dieser Temperatur im Reaktor gehalten. Die gesamte Verweilzeit beträgt 6 Stunden. Nach dieser Reaktionszeit wurde ein Carboxylgruppen-Gehalt von 75 Mol.-% erreicht (bestimmt mittels IR-Spektroskopie). Nach der Reaktion ist ein hochelastischer Gel-Block entstanden.

Nach Beendingung der Hydrolyse wird das freigesetzte Ammoniak, welches ca.15 Gew.-% der gesamten freigesetzten Ammoniak-Menge beträgt, über spezielle Austrittsöffnungen aus dem Reaktor unter einem N₂-Strom entfernt und anschliessend durch Einleiten in 20%-ige Schwefelsäure absorbiert. (Die restlichen 85 Gew.-% der abgespaltenen Ammoniakmenge verbleiben im Gelblock und werden beim Zerkleinern des Gels im Extruder unter einem N₂-Strom zum großen Teil entfernt. Die verbleibenden 20 bis 23 Gew.-% werden in einem Wasser-Alkohol-Gemisch mit Essigsäure neutralisiert).

Die weitere Aufarbeitung des Gels zu dem pulverförmigen Produkt wird unter Anwendung von bekannten verfahrenstechnischen Methoden (Zerkleinern des Gels, Neutralisation, Trocknen, Mahlen) durchgeführt.

Das gebildete elastische Gel in Form eines Blocks wird durch die Bodenöffnung herausgezogen ("Der Block fällt gewissermaßen von selbst aus dem Reaktor heraus").

Das Gel wird danach in kleinere Stücke geschnitten und in einem Extruder mit einer Lochplatte unter gleichzeitiger Entfernung des Ammoniaks unter einem N₂-Strom auf eine Teilchengröße im Bereich von 1 bis 5 mm zerkleinert.

Das erhaltene zerkleinerte, nicht klebende Gel-Granulat wird zur Durchführung der Neutralisation in drei gleich große Portionen aufgeteilt. Die erste Portion wird in einem Wasser-Ethanol-Gemisch mit 20%-iger Essigsäure neutralisiert. Dabei beträgt das Volumenverhältnis von Ethanol zu Wasser im Gemisch 1:1 bis 1:1,2. Nach Abfiltrieren und Waschen wird das Produkt bei Temperaturen zwischen 70 und 80°C getrocknet. Daran anschließend wird das getrocknete Produkt auf ein Teilchengrößenspektrum von 100 bis 850 µm heruntergemahlen.

### Prüfmethoden

### Bestimmung des Quellungsgrades:

250 mg des zu untersuchenden superabsorbierenden Polymerisats werden in ein 300 ml-Becherglas eingewogen und mit 250 bis 300 ml destilliertem Wasser bzw. mit 50 ml einer 0,9 Gew.-%igen NaCl-Lösung übergossen und stehen gelassen.

Nach Erreichen des Gleichgewichtsquellungszustandes wird das erhaltene Gel über ein Filtertuch mit einer Maschenweite von 30 um oder ein Papierfilter abfiltriert und ausgewogen. Der Quellungsgrad errechnet sich dann aus dem Verhältnis Auswaage zu Einwaage in g/g. Jede Bestimmung wird dreimal durchgeführt. Die Messgenauigkeit beträgt ca. 5%.

Für das gemäß Beispiel 1 hergestellte Produkt ergibt sich ein Quellungsgrad von 630 g/g in destilliertem Wasser und von 57,5 g/g in 0,9%iger NaCl-Lösung.

### pH-Wert-Bestimmung:

Der pH-Wert des gemäß Beispiel 1 erhaltenen Produktes beträgt in 0,9%iger NaCl-Lösung 6,5.

### Bestimmung des wasserlöslichen Anteils (WLA):

0,5 g des superabsorbierenden Polymerisats werden mit 500 ml entionisiertem Wasser vermischt und 16 Stunden bei 20°C gerührt. Nach dem Abfiltrieren des Gels erhält man aus der gravimetrischen Bestimmung des Feststoffgehaltes im Filtrat und dem Waschwasser den WLA. Dieser beträgt im Falle des nach Beispiel 1 erhaltenen Produktes 16,5 Gew.-%.

### Beispiele 2 bis 6:

Die Hydrolysebedingungen der nach den Beispielen 2 bis 6 hergestellten Proben sind in Tabelle 1 zusammengefasst. Für diese Beispiele wurde die Hydrolyse der PAN-Emulsionen entsprechend der in Beispiel 1 angegebenen Methode durchgeführt.

Dabei wurden die Neutralisations-Verfahren für die Produkte geändert sowie die Hydrolysebedingungen (die PAN-Konzentration im Reaktionsgemisch, der PAN-Emulsionstyp, das Molverhältnis von PAN zu NaOH, das Gewichtsverhältnis von PAN zu Wasser, die Verweilzeit und die Starttemperatur für die Hydrolyse) variiert.

### Beispiel 2

Das gemäß Beispiel 1 nach der Zerkleinerung in Form von gelartigen Teilchen mit einer Größe zwischen 1 und 4 mm anfallende Produkt (zweite Portion) wurde durch Besprühen mit 20%-iger Essigsäure oberflächlich neutralisiert. Danach wurde das Produkt in einem Ethanol-Wasser-Gemisch mit einem Volumenverhältnis von Ethanol zu Wasser von 1:1 gewaschen und filtriert. Nach dem Trocknen wurde das Produkt auf ein Teilchengrößenspektrum von 100 bis 850 µm gemahlen.

### Beispiel 3

Das nach Beispiel 1 erhaltene zerkleinerte Gel-Granulat (dritte Portion) wurde bei einer Temperatur von 80°C ohne Neutralisation bis zu einer Restfeuchtigkeit von ca. 15 Gew.-% getrocknet. Hierbei wird ein Großteil des abgespaltenen Ammoniaks entfernt, und es verbleiben nur noch ca. 3 bis 4 Gew.-% im getrockneten Produkt, die in dem anschließenden Neutralisationsvorgang durch Essigsäure neutralisiert werden. Die Neutralisation des getrockneten Produktes mit dem Teilchengrößenbereich von 0,3 bis 2 mm wurde in einem Ethanol-Wasser-Gemisch (Volumenverhältnis von Ethanol zu Wasser 1:1) mit 20-%iger Essigsäure durchgeführt.

Nach der Neutralisation wurde das Produkt filtriert, mit einem Ethanol-Wasser-Gemisch gewaschen und bei einer Temperatur zwischen 70 und 80°C getrocknet. Nach dem Trocknen wurde das Produkt in der Weise gemahlen, dass eine Teilchengrößenverteilung von 100 bis 850 µm erhalten wurde.

### Beispiel 4

Das nach Beispiel 2 erhaltene fertige Produkt mit einer Teilchengrößenverteilung von 100 bis 850 µm wurde bei einer Temperatur von 180°C ca. 15 min in einem Umlufttrockenschrank erhitzt

### Beispiel 5

Als Ausgangsprodukt zur Hydrolyse wurde eine unvernetzte PAN-Emulsion mit einem Feststoffgehalt von 30,8 Gew.-% und einem [η]-Wert von 9,0 dl/g mit einer mittleren Teilchengröße von 120 nm eingesetzt. Die Hydrolyse wurde bei einem Molverhältnis von PAN zu NaOH = 1:0,7 entsprechend dem in Beispiel 1 angegebenen Verfahren durchgeführt. Die Neutralisation des Produktes erfolgte unter denselben Bedingungen wie in Beispiel 1 angegeben.

### Beispiel 6

Als Ausgangsprodukt für die Hydrolyse wurde eine durch die Copolymerisation von Acrylnitril mit 0,75 Gew.-% Divinylbenzol, bezogen auf Acrylnitril, erhaltene vernetzte PAN-Emulsion mit einem Feststoffgehalt von 28,2 Gew.-% und einem mittleren Teilchendurchmesser von 115 nm eingesetzt. Die Hydrolyse und die Neutralisation dieser Emulsion wurden unter gleichen Bedingungen wie in Beispiel 1 beschrieben durchgeführt.

In den vier letzten Spalten von Tabelle 1 sind die Quellungsgrade der hergestellten Produkte in destilliertem Wasser und in 0,9 %iger NaCl-Lösung sowie die pH-werte und die Mengen der wasserlöslichen Anteile der superabsorbierenden Produkte, deren Teilchengrößenverteilung jeweils zwischen 100 und 850 µm liegen, aufgeführt.

Die gemessenen hohen Quellungsgrade zeigen sehr deutlich die ausgezeichneten anwendungstechnischen Eigenschaften der durch adiabatisch geführte Hydrolyse erhaltenen Superabsorber.

### Vergleichsbeispiel 7 (aus EP 783 005)

Zur Hydrolyse wurde eine durch den Einbau von 0,75 Gew.-% Divinylbenzol schwach vernetzte Polyacrylnitril-Emulsion mit einer mittleren Teilchengröße von 118 nm und einem Feststoffgehalt von 24,2 % eingesetzt.

Dies im Hochviskosreaktor ("List-Reaktor") durchgeführten Hydrolyse ist durch folgende Parameter definiert:
PAN-Emulsion = vernetzt; [cPAN] in Gew.-% = 19,9; Molverhältnis PAN : NaOH = 1:0,525; Temperatur [°C] = 95; Füllgrad d. Reaktors [Vol-%] = 72,1; Verweilzeit [h] = 2,0; Feststoffgehalt nach der Hydrolyse [Gew.-%] = 32,7; Quellungsgrad [g/l] Wasser = 525; 0,9 %ige NaCl-Lösung = 55.

In Tabelle 1 sind die Reaktionsbedingungen und die anwendungstechnischen Eigenschaften des dabei erhaltenen Produktes angegeben.

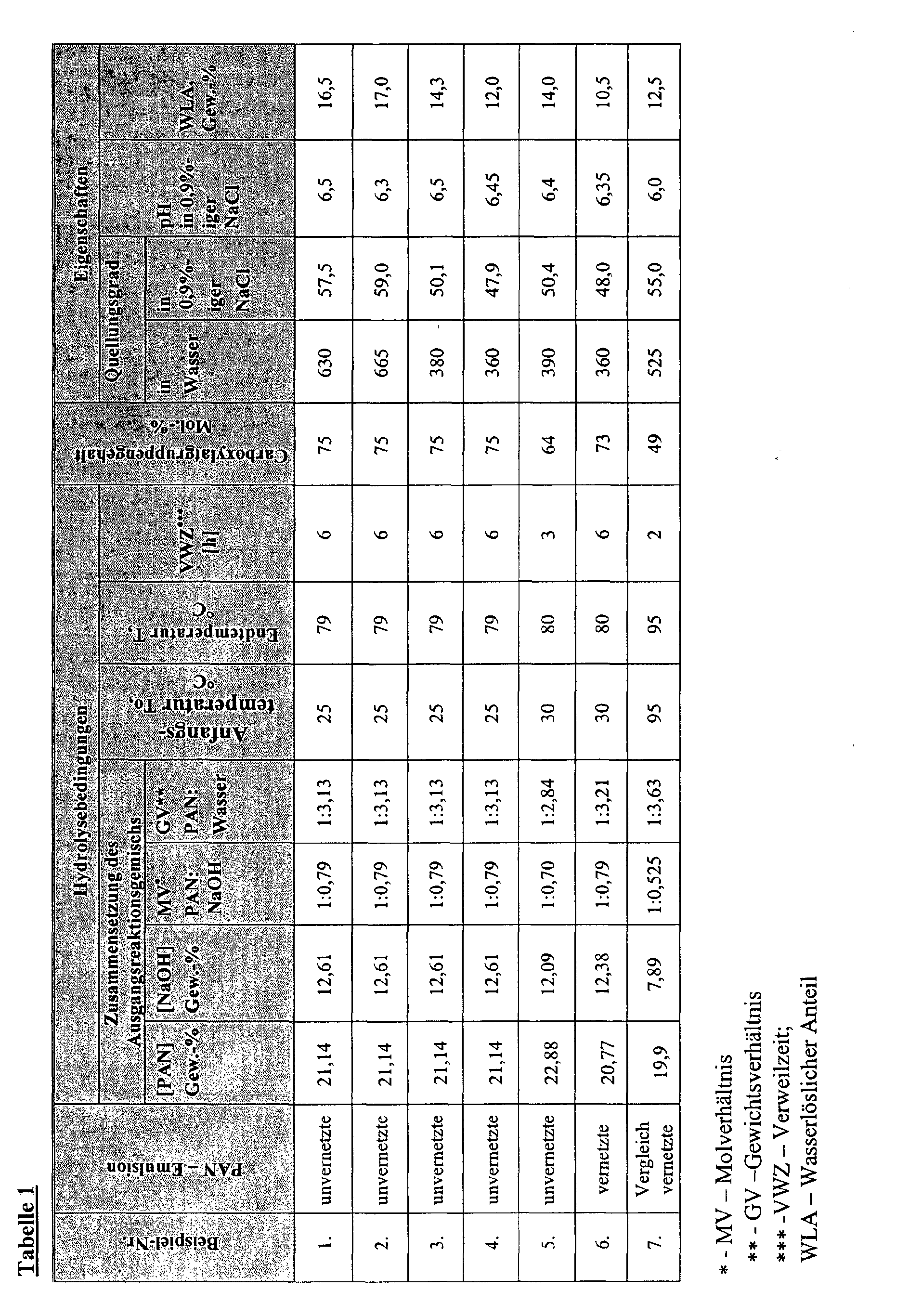

Die nach den Beispielen 1 bis 7 hergestellten superabsorbierenden Polymerisate wurden zusätzlich einer Oberflächenmodifizierung mit Formaldehyd und Kieselsäure unterzogen. Zur Oberflächenmodifizierung werden jeweils 35 g der nach den Beispielen 1 bis 7 erhaltenen superabsorbierenden Polymerisate mit 200 g eines Reaktionsgemischs folgender Zusammensetzung 20 Minuten bei Raumtemperatur gerührt:

| | |
|---|---|
| 178,0g | Methanol |
| 18,0 g | entionisiertes Wasser |
| 3,0 g | Kieselsäure |
| 1,0 g | Formaldehyd |

Nach der Filtration über eine Nutsche wird das Rohprodukt mit einem Feststoffgehalt von 70,1 Gew.-% 30 Minuten bei 98°C im Umluftschrank getrocknet.

In Tabelle 2 sind die anwendungstechnischen Eigenschaften dieser nach den Beispielen 1 bis 7 erhaltenen modifizierten Superabsorber zusammengestellt. Bestimmt wurden dabei folgende Eigenschaften:
- Absorption nach der modifizierten Zylinder-Methode (DE-A 40 15 085); Hierbei wird die SAP-Probe in den Büchner-Trichter eingefüllt und ohne Anwendung von äußerem Druck (kein plangeschliffener Zylinder mit 0,9 %iger NaCl-Lösung gequollen). In Tabelle 2 sind die nach 30 Minuten erhaltenen End-Werte aufgeführt.
- Absorption nach der Tee-Beutel-Methode (European Disposables and Nonwovens Association (Edana) Brüssel, Belgien - Vorschrift 440.0-96)
- Retention (European Dispasables and Nonnovens Association (Edana) Brüssel, Belgien - Vorschrift 440.0-96)
- AUL (Absorbency Under Load) bei 0,3 psi und 0,7 psi (European Disposables and Nonwovens Association (Edana) Brüssel, Belgien - Vorschrift 440.0-96)

Zusätzlich sind in Tabelle 2 die wasserlöslichen Anteile (WLA) sowie die pH-Werte der gemäß den Beispielen 1 bis 7 hergestellten superabsorbierenden Polymerisate zusammengestellt. Alle Untersuchungen wurden mit 0,9 %iger NaCl-Lösung durchgeführt.

Auch hier erkennt man die ausgezeichneten superabsorbierenden Eigenschaften der erfindungsgemäß hergestellten Polymerisate, die sich sowohl in hohen Werten für die Retention als auch für die Absorption unter Druck (AUL) manifestieren. Darüberhinaus werden durch die nachträgliche Oberflächenmodifizierung der Superabsorber im Vergleich zu den nicht oberflächenmodifizierten Produkten aus Tabelle 1 um 10 bis 15% verringerte Gehalte an wasserlöslichen Anteilen gefunden.

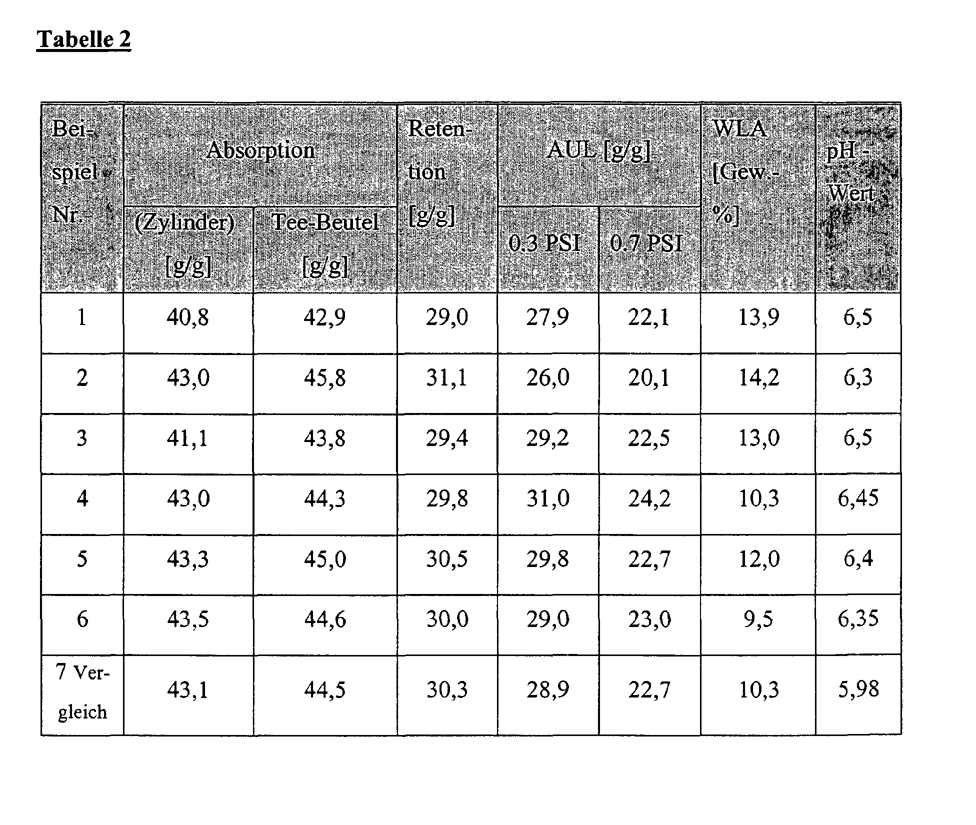

## Patentansprüche

1. Verfahren zur Herstellung von superabsorbierenden Polymerisaten, **dadurch gekennzeichnet, dass** man vernetzte und/oder unvernetzte wässrige Polyacrylnitril-Emulsionen auf Basis von Homo-und/oder Copolymerisaten durch Reaktion mit einer Alkalihydroxidlösung in hochkonzentrierten Reaktionsgemischen adiabatisch ohne Zuführung von mechanischer oder thermischer Energie bei einer Anfangstemperatur von 10° bis 40°C zur Reaktion bringt

2. Verfahren gemäß Anspruch 1, wobei die Hydrolyse der Polyacrylnitril-Emulsionen im Temperaturbereich von 10 bis 90°C durchgeführt wird.

3. Verfahren gemäß einem oder mehreren der vorangegangenen Ansprüche, wobei die Hydrolyse der Polyacrylnitril-Emulsion bei einem molaren Verhältnis der Nitrilgruppen der Ausgangspolymerisate zu den Hydroxylgruppen der Alkalihydroxyde im Bereich von 1:0,5 bis 1:1 durchgeführt wird.

4. Verfahren gemäß einem oder mehreren der vorangegangenen Ansprüche, wobei die Hydrolyse der Polyacrylnitril-Emulsionen in einem Zeitraum von 3 bis 6 Stunden durchgeführt wird.

5. Verfahren gemäß einem oder mehreren der vorangegangenen Ansprüche, wobei die Hydrolyse der Polyacrylnitril-Emulsionen bei einem Gewichtsverhältnis von Polyacrylnitril zu Wasser zwischen 1:2 und 1:4 durchgeführt wird.

6. Verfahren gemäß einem oder mehreren der vorangegangenen Ansprüche, wobei die superabsorbierenden Polymerisate, die auf Basis von unvernetzten Polyacryl-Emulsionen erhalten wurden, nachträglich einer Hitzebehandlung zwischen 150°C und 250°C unterzogen werden.

7. Verfahren gemäß einem oder mehreren der vorangegangenen Ansprüche, wobei die superabsorbierenden Polymerisate nachträglich oberflächenmodifiziert werden.

8. Superabsorbierende Polymerisate, hergestellt gemäß einem oder mehreren der vorangegangenen Ansprüche.

9. Verwendung der gemäß einem oder mehreren der vorangegangenen Ansprüche erhaltenen superabsobierenden Polymerisate zur Herstellung von Hygieneartikeln, als wasserspeichernde Materialien in der Landwirtschaft oder bei der Ummantelung von Elektrokabeln.

10. Hygieneartikel, wasserspeichernde Materialien in der Landwirtschaft und Ummantelungen von Elektrokabeln, hergestellt gemäß Anspruch 8 bis 9.
